Europäisches Patentamt

European Patent Office

Office européen des brevets

(11) Veröffentlichungsnummer : **0 334 152 B1**

# (12) EUROPÄISCHE PATENTSCHRIFT

(45) Veröffentlichungstag der Patentschrift :
**12.08.92 Patentblatt 92/33**

(51) Int. Cl.⁵ : **G06F 15/68, G06F 15/70**

(21) Anmeldenummer : **89104403.4**

(22) Anmeldetag : **13.03.89**

(54) **Verfahren zur Auswertung der Bildinformation bei einer optischen Oberflächenkontrolle mittels eines elektronischen Abtastsystems.**

(30) Priorität : **21.03.88 DE 3809448**

(43) Veröffentlichungstag der Anmeldung :
**27.09.89 Patentblatt 89/39**

(45) Bekanntmachung des Hinweises auf die
Patenterteilung :
**12.08.92 Patentblatt 92/33**

(84) Benannte Vertragsstaaten :
**BE DE ES FR GB IT NL SE**

(56) Entgegenhaltungen :
**DD-A- 156 635**
**DD-A- 253 295**

(56) Entgegenhaltungen :
**DE-A- 2 709 977**
**GB-A- 1 583 073**
**FORTSCHRITT-BERICHTE VDI, Reihe 10, Nr.**
**67 DIPL.ING. M. SEHRAN TATARI, Karlsruhe,**
**"Auswahl von Text- tur-Analyseverfahren zu-**
**rAutomatisierung industrieller Sichtprüfun-**
**gen" Seiten 86-113**

(73) Patentinhaber : **SIEMENS**
**AKTIENGESELLSCHAFT**
**Wittelsbacherplatz 2**
**W-8000 München 2 (DE)**

(72) Erfinder : **Maag, Wolfgang**
**Butzengrabenweg 22**
**W-7582 Bühlertal (DE)**

## Beschreibung

Technisches Gebiet

Die Erfindung betrifft ein Verfahren zur Auswertung der Bildinformation bei einer optischen Oberflächenkontrolle mittels eines elektronischen Abtastsystems, das eine Beseitigung störender Untergrundinformationen der auf Fehlstellen zu untersuchenden Oberfläche ermöglicht.

Stand der Technik

Es ist bekannt aus Reihe 10 der VDI-Fortschritt-Berichte Nr. 67 "Auswahl von Texturanalyseverfahren zur Automatisierung industrieller Sichtprüfungen" von M. S. Tatari, zur Bildung einer adaptiven Grauwertschwelle aus einem Referenzfenster den mittleren Grauwert m zu berechnen. Aus diesem werden iterativ über folgende Rechenvorschrift

$$m_{neu} = m_{alt} + (x_{akt} - m_{alt}) / K1$$

neue Mittelwerte gebildet. Die Wahl der Zeitkonstante K1 steuert den Beitrag des aktuellen Grauwertes $x_{akt}$ bzw. des alten Mittelwertes $m_{alt}$ zum neuen Mittelwert. Grauwerte weit zurückliegender Bildpunkte tragen in immer abgeschwächterer Form zum Ergebnis bei. Durch Addition bzw. Subtraktion einer Grauwertabweichung vom gebildeten Mittelwert ergeben sich eine obere und eine untere Grauwertschwelle, die zusammen einen Bereich bilden. Bildpunkte, deren Grauwerte diesen Bereich verlassen, werden als Fehler detektiert.

Darstellung der Erfindung

Der Erfindung liegt die Aufgabe zugrunde, bei einem Verfahren der eingangs genannten Art eine verbesserte Erkennbarkeit der Fehlstellen zu gewährleisten.

Zur Lösung dieser Aufgabe ist das erfindungsgemäße Verfahren gemäß Anspruch 1 ausgebildet. Als Filterwerte werden in vorteilhafter Weise ein Filterwert am Anfang (beispielsweise der erste Filterwert) und ein Filterwert am Ende (beispielsweise der letzte Filterwert) gemäß Anspruch 2 gewählt.

Das erfindungsgemäße Verfahren ist insofern vorteilhaft, da hier die Detektion kleiner und großer Fehler mit einem Verfahren durchgeführt werden kann und Fehlerbereiche formgetreu und geschlossen dargestellt werden. Eine vorteilhafte Weiterbildung des erfindungsgemäßen Verfahrens ergibt sich gemäß Anspruch 3, die zu einer genaueren Adaption des Untergrundes führt. Das Verfahren kann weiterhin mit einer üblichen elektronischen Anordnung realisiert werden.

Kurze Beschreibung der Zeichnung

Figur 1 zeigt einen typischen Verlauf einer digitalisierten Bildzeile, und
Figur 2 zeigt eine Prinzipanordnung eines Filters, mit der das erfindungsgemäße Verfahren durchgeführt werden kann.

Bester Weg zur Ausführung der Erfindung

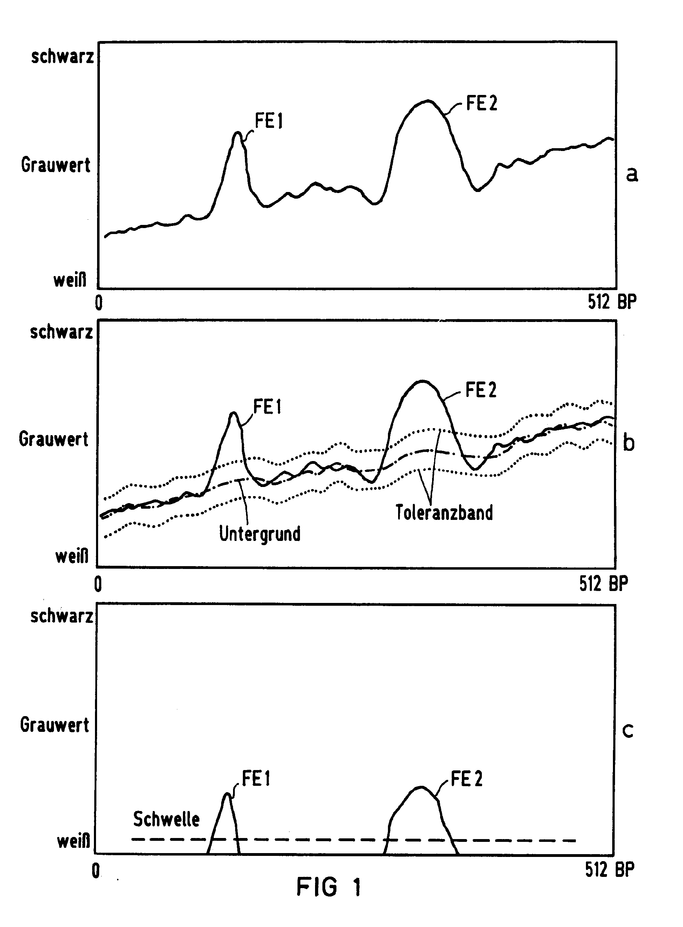

Das Verfahren wird zunächst von Figur 1 erläutert. Das obere Teilbild zeigt einen Ausschnitt einer digitalisierten Videobildzeile mit 512 Bildpunkten BP, wobei die Helligkeit der Bildzeile von links nach rechts abnimmt. In das Helligkeitsgefälle sind zwei Fehler FE1, FE2 eingebettet, links ein kleiner (FE1) mit starker Krümmung und rechts ein großer, schwach gekrümmter Fehler FE2.

Das Verfahren beruht darauf, den Untergrund im Fehlerbereich nachzubilden, d. h., einen Helligkeitsverlauf zu erzeugen, der ohne Auftreten des Fehlers vorhanden gewesen wäre. Die Grauwerte im Fehlerbereich werden durch solche ersetzt, die an die Fehlerumgebung angepaßt sind. Der nachfolgend beschriebene Algorithmus erzeugt aus dem Grauwertverlauf der Bildzeile im ersten Teilbild den strichpunktierten Verlauf des gebildeten Untergrundes für diese Bildzeile im zweiten Teilbild. Um den Untergrund herum wird ein Toleranzband gelegt. Alle Bildpunkte des ursprünglichen Grauwertverlaufes, die außerhalb des Toleranzbandes liegen, gehören zu Fehlstellen. Durch Differenzbildung des Untergrundes vom Grauwertverlauf der originalen Bildzeile erhält man die im unteren Teilbild gezeigten Fehlerbereiche.

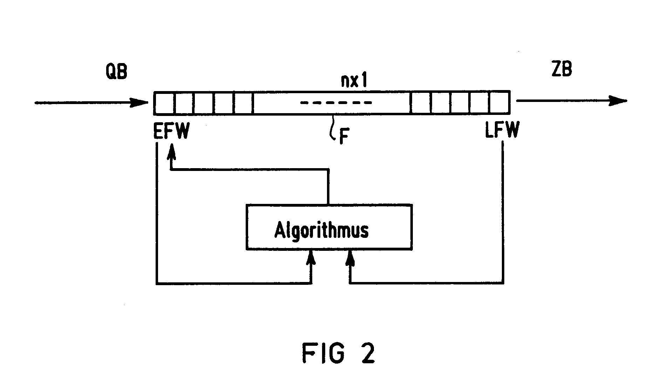

Die Bildung des Untergrundes, die den Kern des Verfahrens darstellt, erfolgt mit einem eindimensionalen Filter F der Größe n x 1 nach Figur 2. Lediglich der erste (EFW) und der letzte Filterwert LFW tragen zur Untergrundbildung bei. Die Bilddaten eines Quellbildes QB werden durch das Filter F vom ersten Filterwert EFW taktweise in Richtung zum letzten Filterwert LFW und von hier in ein Zielbild ZB (Untergrundbild) geschoben.

Die Besonderheit hierbei ist, daß mit jedem Takt aus den beiden Werten EFW$_{alt}$ und LFW gemäß den Formeln (1)

$$\frac{\text{Für 1 EFW}_{alt} - \text{LFW 1} < \text{C1}}{\text{(1) EFW}_{neu} = \text{EFW}_{alt}}$$

bzw. (2)

$$\underline{\text{Für 1 EFW}_{alt} - \text{LFW 1} \geq \text{C1}}$$

$$\text{EFW}_{neu} = \text{LFW} + \text{C2} \qquad \text{für EFW}_{alt} > \text{LFW}$$

(2)

$$\text{EFW}_{neu} = \text{LFW} - \text{C2} \qquad \text{für EFW}_{alt} < \text{LFW}$$

C1, C2   Konstanten

ein neuer Wert EFW$_{neu}$ gebildet wird, der anstelle des alten Wertes EFW$_{alt}$ durch das Filter F läuft. Der korrigierte Wert wird also in den Filteranfang und nicht in die Filtermitte eingeschrieben. Durch diese Maßnahme erhält man ein rekursives Filter, da der korrigierte Wert EFW$_{neu}$ einige Takte später als der letzte Filterwert LFW erneut in die Berechnung eines Filterwertes eingeht.

Die in den Formeln (1) und (2) angegebenen Filterfunktionen stellen nur eine von mehreren Lösungsmöglichkeiten dar.

Gewerbliche Anwendbarkeit

Die Erfindung ist bei optischen Verfahren zur Oberflächenkontrolle, beispielsweise von Blechteilen im Automobilbau, anwendbar.

**Patentansprüche**

1. Verfahren zur Auswertung der Bildinformation bei einer optischen Oberflächenkontrolle mittels eines elektronischen Abtastsystems, bei dem
   – die Bildpunktinformationen eines Quellbildes (QB) zur Bildung eines Zielbildes (ZB) zeilen- und/oder spaltenweise durch ein eindimensionales Filter (F) in einem vorgegebenen Takt geschoben werden,
   – ein erster Filterwert (EFW$_{alt}$) des eindimensionalen Filters (F) in Abhängigkeit von einem zweiten Filterwert (LFW) bei jedem Takt zu einem neuen ersten Filterwert (EFW$_{neu}$) korrigiert wird,
   **dadurch gekennzeichnet,**
   – daß der zweite Filterwert (LFW) im eindimensionalen Filter (F) an einer festen Position in einem festen Abstand hinter dem ersten Filterwert (EFW$_{alt}$) steht, so daß der korrigierte neue erste Filterwert (EFW$_{neu}$) einige Takte später als der zweite Filterwert (LFW) erneut in die Berechnung eines neuen ersten Filterwertes (EFW$_{neu}$) eingeht,
   – daß, falls der betragsmäßige Unterschied der Werte (EFW$_{alt}$, LFW) eine Schwelle überschreitet, der neue erste Filterwert (EFW$_{neu}$) ermittelt wird als Summe aus dem zweiten Filterwert (LFW) und einem Korrekturwert, der so gewählt wird, daß der neue erste Filterwert (EFW$_{neu}$) zwischen dem ersten und dem zweiten Filterwert (EFW$_{alt}$, LFW) liegt,
   – daß, falls der betragsmäßige Unterschied der beiden Werte (EFW$_{alt}$, LFW) unterhalb einer Schwelle liegt, der neue erste Filterwert (EFW$_{neu}$) gleich dem ersten Filterwert (EFW$_{alt}$) gesetzt wird und
   – daß das resultierende Zielbild (ZB) vom Quellbild (QB) subtrahiert wird, zur Beseitigung der Untergrundinformation der auf Fehlstellen zu untersuchenden Oberfläche.
   2. Verfahren nach Anspruch 1, bei dem
   – der erste Filterwert (EFW$_{alt}$) am Anfang des eindimensionalen Filters (F) und der zweite Filterwert (LFW) am Ende des eindimensionalen Filters (F) steht.
   3. Verfahren nach Anspruch 1 oder 2, bei dem
   – die Bildpunktinformationen des Quellbildes (QB) zeilen- und/oder spaltenweise jeweils in beiden Rich-

EP 0 334 152 B1

tungen durch das Filter (F) geschoben werden.

## Claims

1. Method for evaluating the image information in a visual surface check by means of an electronic scanning system, in which
   - the items of pixel information of a source image (QB) are shifted for the purpose of forming a target image (ZB) line by line and/or column by column through a one-dimensional filter (F) in a preset cycle;
   - a first filter value ($EFW_{alt}$) of the one-dimensional filter (F) is corrected as a function of a second filter value (LFW) in each cycle to give a new first filter value ($EFW_{neu}$);
   characterised in that
   - the second filter value (LFW) in the one-dimensional filter (F) stands at a fixed position at a fixed distance after the first filter value ($EFW_{alt}$) so that the corrected new first filter value ($EFW_{neu}$) enters a few cycles later than the second filter value (LFW) anew into the calculation of a new first filter value ($EFW_{neu}$);
   - in that, if the difference in the values ($EFW_{alt}$, LFW) in terms of amount exceeds a threshold, the new first filter value ($EFW_{neu}$) is determined as the sum of the second filter value (LFW) and a correction value which is selected so that the new first filter value ($EFW_{neu}$) lies between the first and the second filter value ($EFW_{alt}$, LFW);
   - in that, if the difference in the two values ($EFW_{alt}$, LFW) in terms of amount lies below a threshold, the new first filter value ($EFW_{neu}$) is set so as to be equal to the first filter value ($EFW_{alt}$); and
   - in that the resultant target image (ZB) is subtracted from the source image (QB) for the purpose of eliminating the background information of the surface to be investigated for defects.

2. Method according to claim 1, in which the first filter value ($EFW_{alt}$) stands at the beginning of the one-dimensional filter (F) and the second filter value (LFW) stands at the end of the one-dimensional filter (F).

3. Method according to claim 1 or 2, in which the pixel information of the source image (QB) is shifted line by line and/or column by column in each case in both directions through the filter (F).


## Revendications

1. Procédé pour évaluer l'information d'image lors d'un contrôle optique de surfaces à l'aide d'un système de balayage électronique, selon lequel
   - les informations des points d'une image d'origine (QB) pour la formation d'une image cible (ZB) sont transférées à une distance prédéterminée ligne par ligne et/ou colonne par colonne à travers un filtre unidimensionnel (F),
   - une première valeur de filtre ($EFW_{ancienne}$) du filtre unidimensionnel (F) est corrigée en fonction d'une seconde valeur de filtre (LFW), lors de chaque cadence, pour former une nouvelle première valeur de filtre ($EFW_{nouvelle}$),
   caractérisé par le fait
   - que la seconde valeur de filtre (LFW) dans un filtre unidimensionnel (F) est située dans une position fixe à une distance fixe derrière la première valeur de filtre ($EFW_{ancienne}$) de sorte que la nouvelle première valeur de filtre corrigée ($EFW_{nouvelle}$) intervient à nouveau, quelques cadences après la seconde valeur de filtre (LFW), dans le calcul d'une nouvelle première valeur de filtre ($EFW_{nouvelle}$),
   - que, dans le cas où la différence en valeur absolue entre les valeurs ($EFW_{ancienne}$, EFW) dépasse un seuil, la nouvelle première valeur de filtre ($EFW_{nouvelle}$) est déterminée en tant que somme de la seconde valeur de filtre (LFW) et d'une valeur de correction, qui est choisie de manière que la première nouvelle valeur de filtre ($EFW_{nouvelle}$) soit située entre la première valeur de filtre et la seconde valeur de filtre ($EFW_{ancienne}$, LFW),
   - que, dans le cas où la différence entre les deux valeurs ($EFW_{ancienne}$, LFW) est inférieure à un seuil, la nouvelle première valeur de filtre ($EFW_{nouvelle}$) est réglée de manière à être égale à la première valeur de filtre ($EFW_{ancienne}$), et
   - que l'image cible résultante (ZB) est soustraite de l'image source (QB) de manière à éliminer l'information de fond de la surface dont on doit étudier la présence de défauts éventuels.

2. Procédé suivant la revendication 1, suivant lequel
   - la première valeur de filtre ($EFW_{ancienne}$) est présente au début du filtre unidimensionnel (F) et la seconde valeur de filtre (LFW) est présente à la fin du filtre unidimensionnel (F).

3. Procédé suivant la revendication 1 ou 2, selon lequel

4

– les informations de points de l'image d'origine (QB) sont décalées respectivement dans les deux directions par le filtre (F) ligne par ligne et/ou colonne par colonne.

FIG 1

FIG 2